# DEMANDE DE BREVET EUROPEEN

(11) **EP 0 739 913 A1**
(43) Date de publication de la demande: **30.10.1996**
(21) Numéro de dépôt: 96400807.2
(22) Date de dépôt: 16.04.1996
(51) Int. Cl.: C08F 255/00, C08F 259/02, C09J 151/00, C09J 151/06

(54) **Poly(oléfines ou styréniques) copolymérisés et greffés avec des monomères ayant la même fonction réactive**

(30) Priorité: 25.04.1995 FR 9504912
(71) Demandeur: ELF ATOCHEM S.A., 92800 Puteaux (FR)
(72) Inventeur: Breant, Patrice, 27470 Serquigny (FR); Jammet, Jean-Claude, 27190 Glisolles (FR); Julien, Olivier, 27300 Bernay (FR); Werth, Michael, 27000 Evreux (FR)
(74) Mandataire: Neel, Henry

(57) **Abrégé**

La présente invention concerne un copolymère (A) comprenant :
a) au moins un motif alpha oléfine ou styrénique ;
b) au moins un motif portant une fonction réactive choisi parmi :
   b1) soit les acides ou des anhydrides d'acide carboxyliques insaturés ;
   b2) soit les époxydes insaturés

et greffé par un monomère porteur d'une fonction réactive du même genre que (b).

Ces copolymères sont utilisés, entre autres, comme liant dans des matériaux multicouches ou comme additifs dans des poudres auto adhérentes.

## Description

La présente invention concerne des poly(oléfines ou styréniques) copolymérisés et greffés avec des monomères ayant la même fonction réactive.

L'introduction de fonctions réactives dans les polymères apolaires ou peu polaires comme les polyoléfines ou les polystyréniques permet d'améliorer certaines de leurs propriétés ou de leur en conférer de nouvelles comme par exemple une meilleure peintabilité ou la possibilité d'adhérer sur d'autres polymères: ceci permet de les utiliser dans différentes applications industrielles comme liants d'adhésion pour des systèmes multicouches ou comme agents de compatibilisation pour des mélanges de polymères.

Généralement, pour les oléfines ou les styréniques polymérisables par initiation radicalaire, ces fonctions réactives sont introduites en cours de polymérisation par copolymérisation avec des monomères insaturés porteurs des fonctions réactives à incorporer comme par exemple l'anhydride maléique ou l'acide acrylique. Ces monomères sont, d'autre part, des agents de transfert actifs ; ce qui a pour effet de limiter la longueur de la chaîne du polymère et, de ce fait, de limiter leur quantité incorporable si on souhaite conserver les propriétés du polymère liées spécifiquement à la masse moléculaire.

Pour les oléfines ou les styréniques difficiles à polymériser par initiation radicalaire comme par exemple le propylène ou pour obtenir des propriétés plus particulières comme par exemple la linéarité de la chaîne macromoléculaire, d'autres systèmes de polymérisation sont mis en oeuvre où l'initiation de la polymérisation est obtenue par des catalyseurs particuliers de type ZIEGLER et NATTA, PHILLIPS ou plus récemment de type METALLOCENES. Ces catalyseurs sont généralement désactivés par la présence de réactifs polaires ; ce qui rend difficile, voire impossible, d'obtenir, par cette voie, les copolymères réactifs recherchés.

Les fonctions réactives, pour ce type de polymères, sont généralement introduites, après polymérisation, par greffage radicalaire, généralement par l'intermédiaire de réactifs comme des péroxydes, soit à l'état fondu, soit en solution ou à l'état solide par exemple par irradiation. Leur quantité incorporable est liée à l'évolution de la masse moléculaire du polymère, sous l'action des radicaux, qui peut augmenter dans le cas des polyéthylènes ou diminuer dans le cas des polypropylènes ou des polystyrènes. Cette quantité est également liée au procédé de greffage.

Nous avons découvert qu'il était possible, pour les copolymères obtenus par copolymérisation directe d'oléfines (ou de styréniques) avec des monomères porteurs de fonctions réactives :
- d'augmenter la quantité incorporable de fonctions réactives,
- d'augmenter la réactivité de ces fonctions,
- d'augmenter la masse moléculaire (ou de la diminuer).
par un greffage, après polymérisation, de monomères porteurs de la même ou du même genre de fonction réactive.

On entend par "copolymérisation directe" la formation du copolymère par les différents monomères par opposition aux monomères fixés par greffage.

La présente invention est donc un copolymère (A) comprenant :
a) au moins un motif alpha oléfine ou styrénique ;
b) au moins un motif portant une fonction réactive choisi parmi :
   b1) soit les acides ou des anhydrides d'acide carboxyliques insaturés ;
   b2) soit les epoxydes insaturés
   et greffé par un monomère porteur d'une fonction réactive du même genre que (b), par irradiation ou par un initiateur radicalaire.

L'art antérieur n'a pas décrit de tels produits.

L'alpha oléfine (a) peut être par exemple l'éthylène, le propylène, le butène-1, l'héxène-1, etc. et de préférence, l'éthylène.

Le styrénique (a) peut être le styrène, le chlorostyrène, l'alphaméthylstyrène, etc. et de préférence, le styrène.

Les fonctions (b1) dites "réactives incorporées par polymérisation directe" dérivent d'acides carboxyliques insaturés comme par exemple l'acide acrylique ou d'anhydride d'acides carboxyliques comme l'anhydride maléique ou l'anhydride itaconique ou de tout autre anhydride insaturé. Ces fonctions peuvent être partiellement ou totalement saponifiées après polymérisation et avant greffage par l'intermédiaire d'une base minérale ou organique.

Les fonctions (b2), dites "réactives incorporées par polymérisation directe", peuvent également dériver de comonomères insaturés porteurs de fonction époxydée comme des esters et des éthers de glycidyle aliphatiques tels que les (méth)acrylates de glycidyle, maléate de glycidyle, itaconate de glycidyle, vinylglycidyléther, allylglycidyléther ou le vinylcyclohéxèneoxyde.

Les fonctions réactives greffées après polymérisation dérivent d'acides carboxyliques insaturés comme par exemple l'acide acrylique ou d'anhydride d'acides carboxyliques comme l'anhydride maléique ou l'anhydride itaconique ou de tout autre anhydride insaturé.

Elles peuvent également dériver de comonomères insaturés porteurs de fonctions époxydées comme des esters et des éthers de glycidyle aliphatiques tels que les (méth)acrylates de glycidyle, maléates de glycidyle, itaconates de glycidyle, vinylglycidyléther, allylglycidyléther ou le vinylcyclohéxèneoxyde.

Les fonctions réactives greffées sont choisies comme non-réactives, dans les conditions de greffage, avec les fonctions réactives polymérisées.

Si on a copolymérisé (b1), alors on greffe un monomère du même groupe (b1).

En plus des motifs (a) et (b), le copolymère de l'invention peut comprendre des motifs (c) comme par exemple les (méth)acrylates d'alkyle ou les alkylates de vinyle. Ces monomères sont incorporés au moment de la copolymérisation et peuvent également être porteurs de fonctions généralement réactives excepté avec la fonction réactive copolymérisée.

Les comonomères (méth)acrylate d'alkyle peuvent être le (méth)acrylate de méthyle ou d'éthyle ou de butyle ou de tout autre radical alkyle de chaîne plus longue, linéaire ou ramifiée, porteur de fonctions spécifiques ou non.

Les alkylates de vinyle peuvent être l'acétate, le propionate, le benzoate de vinyle ou tout autre radical alkylate.

Le greffage de la fonction réactive se fait soit à l'état fondu, par exemple dans une extrudeuse ou dans un mélangeur interne, soit en solution dans un solvant approprié, par l'intermédiaire d'un initiateur radicalaire. Il peut également se faire à l'état solide par l'intermédiaire d'irradiation comme par exemple les UV, le rayonnement électronique ou le rayonnement Gamma.

L'initiateur radicalaire est choisi en fonction de sa réactivité, en particulier en fonction de son temps de demi-vie qui doit être compatible avec le procédé de greffage et, en particulier, avec le temps de séjour du produit dans le réacteur et avec la température de la réaction.

Il est choisi, en particulier, parmi les peroxydes de diacyles ou de dialkyles, de dicétones, de dicarbonnates, les peroxyesters, les peroxycétals, les peroxydes d'organosulfonyles ou les hydroperoxydes.

Il peut être introduit soit pur soit en solution dans un solvant approprié ou supporté par une poudre de polymère. Il peut être injecté par une pompe doseuse dans la matière fondue ou introduit en trémie d'alimentation avec les granulés de polymère.

Le monomère réactif à greffer peut être introduit par les mêmes procédés que l'initiateur radicalaire.

Selon une forme avantageuse, le copolymère de l'invention est un copolymère de l'éthylène (a) d'un (méth)acrylate d'alkyle (c) et de l'anhydride maléique (b) greffé par de l'anhydride maléique (MAH).

De préférence, l'éthylène représente 65 à 92 % en poids de (a) + (b) + (c), le (méth)acrylate d'alkyle représente 3 à 34 % en poids de (a) + (b) + (c), l'anhydride maléique 1 à 5 % en poids de (a) + (b) + (c), le total de (a), (b), (c) étant 100 % et l'anhydride maléique greffé représente jusqu'à 5 parties pour 100 parties de (a) + (b) + (c).

La présente invention concerne aussi des mélanges du copolymère greffé précédent avec des polymères (B) tels que par exemple des polyoléfines, des polystyréniques, des élastomères tels que par exemple, EPR, EPDM, SBR ou des copolymères blocs SBS (styrène / butadiène / styrène), SEBS (styrène / éthylène butène / styrène) ou SIS (styrène / isoprène / styrène).

Le polymère (B) peut avoir été greffé ou copolymérisé avec les monomères porteurs des mêmes fonctions réactives que (A).

Le mélange du copolymère (A) et du polymère (B) peut se faire par les techniques habituelles.

Selon une forme particulière, le greffage du copolymère (A) à motifs (a) (b) et éventuellement (c) peut se faire en présence du polymère (B) qui peut alors se greffer aussi.

Le greffage peut ainsi se faire en présence, par exemple, d'autres polymères comme le polypropylène (PP) ou le polystyrène (PS); ce qui permet, d'une part de moduler les quantités incorporables et les évolutions de la masse moléculaire du produit et, d'autre part, de l'utiliser dans certaines applications particulières, comme par exemple en dilution dans un autre polymère pour les applications ne nécessitant pas des teneurs incorporées importantes.

La demanderesse a découvert que ces dilutions sont plus actives que le même polymère greffé avec la même quantité de fonctions réactives.

Ces polymères sont choisis en fonction de leur type de réactivité vis à vis des initiateurs radicalaires, de leurs propriétés physiques et de l'application finale du produit.

Ce peut être par exemple les polypropylènes (homopolymères ou copolymères avec l'éthylène), les polystyrènes (homopolymères (dits cristal) ou polymérisés en présence de butadiène ou de polybutadiène (dits choc)) ou les polyéthylènes linéaires de densité variable. Ce peut être aussi des EPR, EPDM, SBR ou des copolymères blocs SBS, SEBS ou SIS. Les proportions de ces polymères, par rapport au polymère porteur de fonctions réactives, sont choisies en fonction des propriétés recherchées du produit final. Le polymère réactif peut être minoritaire.

Les produits greffés peuvent être utilisés comme liants d'adhésion dans des complexes multicouches en particulier comme adhésifs entre une couche de polyoléfine (PE, PP) ou de styrénique (PS) suivant leur nature et une couche de polymère possédant des fonctions susceptibles de réagir avec les fonctions réactives polymérisées ou greffées du liant comme, par exemple, les copolymères éthylène/alcool vinylique (EVOH), les polyamides (PA), les copolymères à blocs polyéther et blocs polyamides, les polyesters (PET, PBT). Une application particulière consiste à utiliser les produits greffés comme liants entre une couche de polyoléfine et une couche d'oxyde minéral (par exemple de la silice) déposée par diverses techniques sur un autre polymère comme l'EVOH ou le PET.

Pour les mêmes types d'applications que précédemment, les produits greffés peuvent être préalablement dilués dans un polymère ne comportant par de fonctions réactives (PE, PP, PS, ..... ).

La présente invention concerne aussi un matériau comprenant un film recouvert d'oxyde de silicium et un film de polyoléfine tel que le liant disposé entre l'oxyde de silicium et le film de polyoléfine est le copolymère (A) de l'invention, éventuellement mélangé avec le polymère (B).

La présente invention concerne aussi un matériau comprenant au moins deux films ou deux couches de thermoplastiques tel que le liant d'adhésion disposé entre les films ou les couches est le copolymère (A) de l'invention, éventuellement mélangé avec le polymère (B).

Le matériau des films ou des couches peut être le polyéthylène, l'EVOH, le polypropylène, le polystyrène, les polyesters, les polyamides.

Les produits greffés peuvent être également utilisés comme additifs dans certains autres polymères afin d'améliorer certaines propriétés; en particulier, l'emploi de ces produits, conjointement avec de l'EVOH, en dilution dans du polyamide ( PA11 ) permet d'obtenir des niveaux d'adhérence remarquables pour les applications poudres fines autoadhérentes et une bonne tenue au brouillard salin.

Les poudres de polyamide sont utilisées pour faire des revêtements de pièces métalliques, par exemple, des paniers de lave-vaisselle.

On peut appliquer les poudres au pistolet électrostatique, puis passer au four la pièce revêtue de cette poudre jusqu'à ce que la poudre fonde et produise un film continu de polyamide.

On peut aussi chauffer la pièce métallique, puis la tremper dans un bain fluidisé de poudre de polyamide, la température de la pièce provoque la fusion et produit un film de polyamide sur la pièce métallique. On peut aussi disposer des électrodes dans le bain fluidisé pour modifier les conditions de dépôt de la poudre de polyamide.

Ces techniques sont décrites dans les brevets EP 367 653, EP 412 888, DD 241 206, DD 242 353, EP 293 292.

La présente invention concerne aussi ces pièces métalliques revêtues.

### Exemples

On utilise les produits suivants :

*Nomenclature des produits utilisés:*
- **LOTADERL1:**: Copolymère Ethylène/Acrylate de butyle/Anhydride maléique (81.5/15/3.5) IF = 5
- **LOTADER L2 :**: Copolymère Ethylène/Acrylate d'éthyle/Anhydride maléique (90.81613.2) IF = 200
- **LOTADER L3 :**: Copolymère Ethylène/Acrylate d'éthyle/Anhydride maléique (69.812813.2) IF = 40
- **LOTADER L4**:: Copolymère Ethylène/Acrylate de butyle/Anhydride maléique (69.812813.2) IF = 5
- **PP ADSYL 7130 XCP**:: Copolymère Propylène/Ethylène de densité = 0.89 g/cm3, d'IF = 5.5 ( 230°C/2.16 kg ), de point de fusion = 135°C.
- **PEHD 2250 MN53**:: Polyéthylène haute densité de densité = 0.953 g/cm3 et d'IF = 25
- **STAMYLEX 8076F**:: Polyéthylène basse densité linéaire d'IF = 7 et de densité = 0.910 g/cm3
- **STAMYLEX 1026F:**: Polyéthylène basse densité linéaire d'IF = 4 et de densité = 0.919 g/cm3
- **VISTALON 808:**: Copolymère Ethylène/propylène (15% de propylène ) d'IF = 0.17
- **OREVAC 1**:: Mélange de polyoléfines de densité = 0.909 g/cm3, d'IF = 0.8 et de point de fusion = 117°C greffé MAH.
- **OREVAC 2**:: Copolymère éthylène/acrylate d'alkyle d'lF=2 greffé MAH.

- **1003 FN 22:**: Polyéthylène radicalaire basse densité d'IF = 0.25 et de densité = 0.922
- **1020 FN 24:**: Polyéthylène radicalaire basse densité d'IF = 2.4 et de densité = 0.922
- **EVOH:**: SOARNOL A 4412:Copolymère Ethylène/Alcool vinylique à 44% molaire d'éthylène et d'IF = 5.3
- **PA 11** :: Polyamide 11 RILSAN de viscosité intrinsèque = 1

### Procédé de fabrication des produits:

Les produits sont greffés par de l'anhydride maléique. Ils sont fabriqués en extrudeuse bi-vis co-rotative de type WERNER ou LEISTRITZ dans les conditions suivantes:

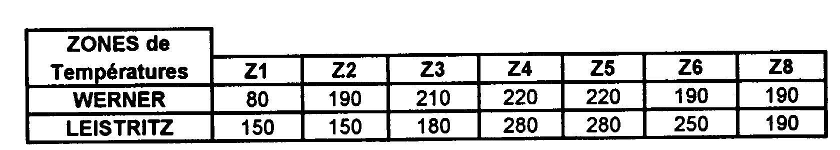

L'anhydride maléique, sur poudre de polymère, et le ou les polymères à greffer sont introduits en zone Z1 par l'intermédiaire de deux doseurs pondéraux séparés.

L'initiateur radicalaire, pur ou en dilution dans un solvant approprié, est introduit par une pompe doseuse en zone Z2. Les températures dans les zones Z3, Z4 et Z5 sont au moins suffisantes pour que 99.9% de l'initiateur radicalaire réagisse avant la zone Z6. L'initiateur radicalaire utilisé est le péroxyde de 2,5 diméthyl-2,5 (ditertiobutyl) héxane (LUPEROX 101) (DHBP).

Les résidus de l'initiateur radicalaire, le solvant et l'anhydride maléique non réagi sont dégazés sous vide en zone Z6.

Le débit d'extrusion en sortie de la filière Z8 varie suivant la vitesse de vis imposée entre 12 et 15 kg/h.

Le jonc est granulé après refroidissement. Les produits sont caractérisés par leur indice de fluidité (sous 2.16kg à 190°C exprimé en dg/mn sauf pour le LOTADER L2 exprimé en dg/mn sous 325g à 190°C) et la teneur en anhydride maléique (MAH) greffée (exprimée en pourcents massiques).

| **PRODUITS** | **POLYMERE REACTIF A non greffé** | **DEUXIEME POLYMERE B** | **Teneur du 2ème polymère** | **DBHP introduit** | **MAH introduit** | **IF** | **MAH greffé** |
|---|---|---|---|---|---|---|---|
| **1** | LOTADER L1 | | | 0.072% | 1% | 2.1 | 0.9 |
| **2** | LOTADER L2 | | | 0.15% | 1% | 14 | 0.78 |
| **3** | LOTADER L3 | PP ADSYL 7130 XCp | 20% | 0.28% | 4% | 13.5 | 1.04 |
| **4** | LOTADER L3 | PEHD 2250MN53 | 80% | 0.28% | 4% | 5 | 1.2 |

### Mise en oeuvre et évaluation des produits:

Le produit 3 a été dilué à 10% (produit 5) dans un polyéthylène basse densité linéaire (STAMYLEX 8076 F) en présence de 25% d'un EPR (à 15% mole de propylène) (VISTALON 808) pour être évalué comme liant d'adhésion du système PE/liant/EVOH comparativement à un liant classique de ce type de structure (OREVAC 1) contenant la même quantité de MAH.

Comparativement aussi, un simple mélange non greffé de polypropylène ADSYL et de LOTADER L4 tel que possédant une viscosité du même ordre de grandeur que le produit 3 a été dilué à 10 % dans le mélange STAMYLEX 08876F/EPR (produit 6).

Le système multicouche est obtenu par pressage des trois films de polymère constitutif.

Les films d'EVOH et de liant obtenus par pressage, d'épaisseur 100 µm, sont découpés aux dimensions des cadres et séchés sous vide à 80°c pendant une nuit.

Le film de polyéthylène ( basse densité radicalaire: 1003FN22 ), le film de liant et le film d'EVOH sont disposés dans cet ordre dans un cadre en inox lui-même placé entre plaques d'acier. L'ensemble est pressé à 5 bars à 160°C pendant 90s. Après le thermoscellage, l'ensemble est refroidi 1 mn à 5 bars. L'adhésion apportée par le liant dans la structure tri-couche est évaluée par un test de pelage en T à 200 mm/mn (exemples A, B et C).

Le produit 1 a été évalué comme liant d'adhésion dans le système tri-couche PE/liant/PET-SiOx, comparativement au produit de départ non greffé (LOTADER L1) et comparativement à un copolymère éthylène/acrylate d'alkyle greffé par de l'anhydride maléique (0.4%) pour évaluer les effets respectifs du MAH copolymérisé, greffé et copolymérisé/greffé.

On a préparé des bobines de film PET revêtu d'oxyde de silicium. La couche d'oxyde de silicium déposée par plasma fait 200 angströms et le film de PET 12 µm.

Le thermoscellage est fait dans les mêmes conditions, mais à 300 bars, que précédemment. L'adhésion est mesurée par pelage à 180° du film de liant et du film de PET recouvert d'oxyde de silicium à une vitesse de 100 mm/mn pour 25 mm de largeur ( exemples D, E et F ).

Le produit 1 a également été évalué comme liant du système cinq couches PE/liant/EVOH/liant/PE comparativement au LOTADER L1 non greffé tel que ou prédilué à 20% dans un polyéthylène basse densité linéaire (LLDPE ) et comparativement également à un liant classique de ce type d'application (OREVAC 1). Le LLDPE utilisé pour la dilution est le STAMYLEX 1026F. Le PE est le PEBD 1020 FN 24 et l'EVOH, le SOARNOL ET. La structure cinq couches a été réalisée sur un ensemble d'extrudeuses ERWEPA en film cast dans les conditions habituelles d'extrusion de ce genre de structure avec les épaisseurs suivantes 20/10/10/10/20 exprimées en µm.

L'adhésion a été évaluée par pelage avec un angle de pelage libre à une vitesse de traverse de 200 mm/mn sur des éprouvettes prédécoupées de 15 mm de large et 20 mm de long. L'adhérence est mesurée juste après l'extrusion et 3 jours plus tard (exemples G, H, I et J).

Le produit 2 a été évalué en formulation à différentes teneurs dans des poudres auto adhérentes de polyamide 11 (PA11) additionné d'EVOH, comparativement au LOTADER L2 non greffé. Les mélanges sont réalisés sur petit malaxeur BRABENDER à des températures comprises entre 190°C et 210°C. Les produits obtenus sont broyés afin d'obtenir une poudre de granulométrie classique pour ce type d'application (produits 7 à 15).

Le substrat est en acier dégraissé et grenaillé (100*100*3 mm3). Il est préchauffé dans une étuve ventilée pendant 10 mn à 330°C. Il est ensuite trempé dans un lit fluidisé constitué de la poudre à évaluer pendant 5 s et refroidit à température ambiante. Le film obtenu sur le substrat est typiquement de 400 µm.

L'évaluation de l'adhérence du film sur le substrat est faite après différentes périodes de temps d'exposition au brouillard salin, selon la norme NF X 41 0002.

L'adhérence est estimée et classée suivant la norme NF T 58-112. Une note de 0 à 4 est donnée pour des adhérences croissantes par intervalle de 0.5 (exemples K, L, M, N, O, P, Q ,R et S).

Le greffage de MAH sur les LOTADER améliore nettement l'adhérence après brouillard salin.

### Exemples applicatifs:

a) Liant pour système PE/liant/EVOH.

| **EXEMPLES** | **PRODUITS** | **ADHESION (N/15 mm)** |
|---|---|---|
| A | produit 5 | 10 |
| B témoin | OREVAC 1 | 11 |
| C témoin | produit 6 | 3 |

b) Liant pour système PE/liant/PET-SiOx.

| **EXEMPLES** | **PRODUITS** | **ADHESION (N/15 mm)** |
|---|---|---|
| D | Produit 1 | 25 |
| E témoin | LOTADER L1 | 3 |
| F témoin | OREVAC 2 | 1.2 |

c) Liant pour système PE/liant/EVOH/liant/PE.

| **EXEMPLES** | **PRODUITS** | **ADHESION après extrusion . (N/15 mm)** | **ADHESION 3 jours après l'extrusion . (N/15 mm)** |
|---|---|---|---|
| G | produit 1 | 2.8 | 4.6 |
| H témoin | LOTADER L1 | 0.6 | 4.2 |
| I témoin | LLDPE/LOTADER L1 à 20% | 0.17 | 0.55 |
| J témoin | OREVAC 1 | 3.5 | 4.4 |

d) Additif de poudre auto adhérente.
d1) Formulations :

| **PRODUITS** | **PA 11 naturel (pcr)** | **EVOH (pcr)** | **LOTADER L2 (pcr)** | **PRODUIT 2 (pcr)** |
|---|---|---|---|---|
| 7 | 100 | | 8 | |
| 8 | 100 | 4 | 8 | |
| 9 | 100 | | 15 | |
| 10 | 100 | | | 4 |
| 11 | 100 | 4 | | 4 |
| 12 | 100 | | | 8 |
| 13 | 100 | 4 | | 8 |
| 14 | 100 | | | 12 |
| 15 | 100 | 4 | | 12 |

d2) Adhésion après brouillard salin :

| **EXEMPLES** | **PRODUITS** | **ADHERENCE INITIALE** | **APRES 500 heures** | **APRES 1500 heures** |
|---|---|---|---|---|
| K témoin | 7 | 1.5 | 0 | 0 |
| L témoin | 8 | 3.5 | 1 | 1 |
| M témoin | 9 | 3.5 | 1 | 0.5 |
| N | 10 | 3.5 | 0.5 | 0.5 |
| O | 11 | 4 | 1.5 | 0.5 |
| P | 12 | 3.5 | 1 | 0.5 |
| Q | 13 | 3.5 | 3.5 | 3 |
| R | 14 | 4 | 1.5 | 1.5 |
| S | 15 | 3.5 | 3 | 3 |

## Revendications

1. Copolymère (A) comprenant :
a) au moins un motif alpha oléfine ou styrénique ;
b) au moins un motif portant une fonction réactive choisi parmi :
b1) soit les acides ou des anhydrides d'acide carboxyliques insaturés ;
b2) soit les epoxydes insaturés
et greffé par un monomère porteur d'une fonction réactive du même genre que (b) par irradiation ou par un initiateur radicalaire;

2. Copolymère selon la revendication 1 comprenant des motifs éthylène, (méth)acrylate d'alkyle et anhydride maléique greffés par de l'anhydride maléique.

3. Mélange comprenant un copolymère (A) selon la revendication 1 ou 2 et un polymère (B) pouvant être choisi parmi les polyoléfines, les polystyréniques, les élastomères ou les copolymères blocs SBS, SEBS ou SIS, ces polymères pouvant être greffés par un monomère ayant les mêmes fonctions réactives (b) que le copolymère (A).

4. Procédé de préparation des copolymères selon la revendication 1 ou 2 dans lequel on effectue le greffage par un initiateur radicalaire soit à l'état fondu, soit en solution dans un solvant, soit à l'état solide par irradiation.

5. Procédé de préparation du mélange selon la revendication 3, (B) étant greffé, dans lequel le greffage pour produire le copolymère (A) se fait en présence du polymère (B).

6. Matériau comprenant un film recouvert d'oxyde de silicium et un film de polyoléfine tel que le liant disposé entre l'oxyde de silicium et le film de polyoléfine est le copolymère ou le mélange de l'une quelconque des revendications 1 à 3.

7. Matériau comprenant au moins deux films ou deux couches de thermoplastiques tel que le liant d'adhésion disposé entre les films ou les couches est le copolymère ou le mélange de l'une quelconque des revendications 1 à 3.

8. Pièces métalliques revêtues d'un copolymère selon l'une des revendications 1 à 3.
